# EUROPÄISCHE PATENTSCHRIFT

(11) **EP 0 940 000 B1**
(45) Veröffentlichungstag und Bekanntmachung des Hinweises auf die Patenterteilung: **14.08.2002**
(21) Anmeldenummer: 97946182.9
(22) Anmeldetag: 19.11.1997
(51) Int. Cl.: H02K 19/10, H02K 3/18

(54) **ZWEIPHASIGE, ELEKTRONISCH KOMMUTIERTE RELUKTANZMASCHINE**
ELECTRONICALLY SWITCHED TWO PHASES RELUCTANCE MACHINE
MACHINE A RELUCTANCE DIPHASEE COMMUTEE ELECTRONIQUEMENT

(30) Priorität: 20.11.1996 RO 9602188
(43) Veröffentlichungstag der Anmeldung: 08.09.1999
(73) Patentinhaber: Lungu, Iancu, 74381 Bukarest 3 (RO)
(72) Erfinder: Lungu, Iancu, 74381 Bukarest 3 (RO)
(74) Vertreter: Gerbaulet, Hannes
(86) Internationale Anmeldenummer: RO9700007
(87) Internationale Veröffentlichungsnummer: WO9823024

(56) Entgegenhaltungen:
- EP-A- 0 340 029
- EP-A- 0 605 247
- WO-A-90/11641
- WO-A-96/09683
- US-A- 3 857 078
- US-A- 4 501 980
- US-A- 4 584 513
- PATENT ABSTRACTS OF JAPAN vol. 012, no. 215 (E-623), 18.Juni 1988 & JP 63 011052 A (SECOH GIKEN INC), 18.Januar 1988
- PATENT ABSTRACTS OF JAPAN vol. 014, no. 517 (M-1047), 13.November 1990 & JP 02 216323 A (HINO MOTORS LTD;OTHERS: 01), 29.August 1990

## Beschreibung

Die Erfindung betrifft insbesondere einen Motor der nach dem Prinzip einer elektronisch kommutierten Reluktanzmaschine, die auch als SR (nach dem englischen Begriff Switched reluctance) Maschine bekannt ist, der als Gleichstrommotor einsetzbar ist und eine zusätzliche Funktion als Generator haben kann.

Das elektromagnetische Teil (der Stator) dieser Maschine besteht aus einer geraden Zahl von Elektromagneten, die untereinander unabhängig sind und die derart geschaltet werden, dass sie zwei Phasen bilden, die sukzessiv gesteuert werden.

Ein Reluktanzmotor dieser Art ist bekannt aus der internationalen Anmeldung PCT-RO 95/00012 (WO/96/09683).

Dieser Motor hat insgesamt vier Elektromagnete, die diametral entgegengesetzt angebracht sind, die die Motorphasen X und Y bilden.

Diese Maschine entwickelt die höchste spezifische, auf das Gewicht bezogene Leistung (W/kg) bei Drehzahlen die oft für manche Anwendungen zu hoch liegen (z.B. über 10.000 Umdrehungen pro Minute).

Aus der WO 90/11641 ist ein elektronisch kommutierter Reluktanzmotor bekannt, bei dem der Stator ungleichmäßig voneinander beanstandete Pole aufweist, welche als Paare zusammengefaßt sind. Die Pole des Rotors sind dagegen gleichmäßig voneinander beabstandet angeordnet. Die Statoranordnung ist derart ausgebildet, dass Reluktanzpfade zwischen benachbarten Statorpolpaaren vermieden sind, so dass keine hohen Schaltfrequenzen erforderlich sind.

Aufgabe der Erfindung ist, Bauarten und Anwendungsbeispiele einer einfachen, effizienten und leichten Reluktanzmaschine mit zwei Phasen zu zeigen, die für die Anwendungsfelder geeignet ist, wo hohe Leistungsgewichte bei niedrigeren Drehzahlen benötigt werden, also für Anwendungen, bei denen der abgegebene bzw. aufgenommene Drehmoment (bei Generatoren) hoch liegt.

Diese Maschine ist aufgrund der hohen Leistungen bei niedrigem Gewicht besonders geeignet für Anwendungen der Kfz-Industrie.

Ihr Einsatz als Anlasser / Lichtmaschine für Verbrennungsmotoren ist vorteilhaft, wobei sie auch eine Zusatzfunktion als Hilfsantrieb haben kann. In diesem Fall ist der Rotor mit dem Schwungrad des Verbrennungsmotors verbunden (oder ist als Teile von diesem ausgebildet), wobei die U-Joche sich auf dem Kupplungsgehäuse befinden.

Weitere Anwendungsfelder sind Lüftermotoren für die Kühler von Kraftfahrzeugen oder im Haushalt, z.B. für Waschmaschinen.

Dies hat den Vorteil, dass auch bei niedrigen Drehzahlen ein hohes Drehmoment ohne Drehmomenteinbrüche zur Verfügung steht, wodurch sich die erfindungsgemäß Reluktanzmaschine besonders als Starter für Brennkraftmaschinen in Kraftfahrzeugen eignet.

Das elektromagnetische Teil (der Stator) dieser Maschine ist mit mindestens 6 Jochen ausgeführt, die in unterschiedlichen Arten ausgeführt werden können, wie dieser Beschreibung zu entnehmen ist.

Die Anzahl der Joche pro Phase und deren Auslegung ist aus einem Optimierungsgrundsatz abgeleitet, wobei wirtschaftliche und technologische Standpunkte auch berücksichtigt werden.

Als Optimierungsgrundlage wird eine Schaltfrequenz ausgewählt, bei der sowohl Leistungsgewicht wie Wirkungsgrad für die jeweilige Anwendung optimal sind. Aus dieser Frequenz und der benötigten Drehzahl ergibt sich die optimale Polzahl.

Sowohl der Stator wie der Rotor der elektronisch geschalteten SR-Maschine haben ausgeprägte Pole.

Wie vom Stand der Technik bekannt, entspricht die Fläche eines Rotorpols der Fläche eines Statorpols.

Der Stator besteht aus einzelnen, magnetisch untereinander isolierten, U-förmigen Elektromagneten, die wenigstens eine Wicklung tragen.

Diese Elektromagnete sind vorzugsweise aus einem Stapel U-förmiger Stanzbleche hergestellt. Die Öffnung der zwei U-Schenkel ist genauso breit wie die Breite eines Pol-Rotorzahnes, beide haben also einen Winkelumfang, der dem Winkelumfang eines U-Schenkels, bzw. der Schenkelweiter (eines Statorpols) entspricht.

Dieser Winkel w (Schaltschritt) bestimmt auch die Größe und die Anzahl der Elektromagnete, bzw. die Schaltfrequenz bei einer vorgegebenen Rotationsgeschwindigkeit der Maschine. Die Einzelmagnete und die Rotorpole bilden die aktiven Teile der Zweiphasen-Maschine.

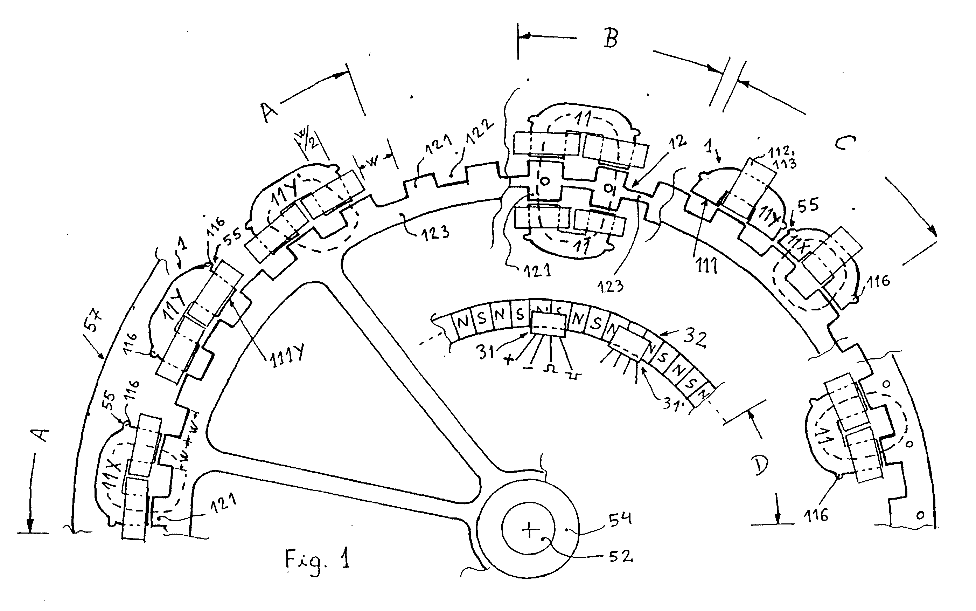

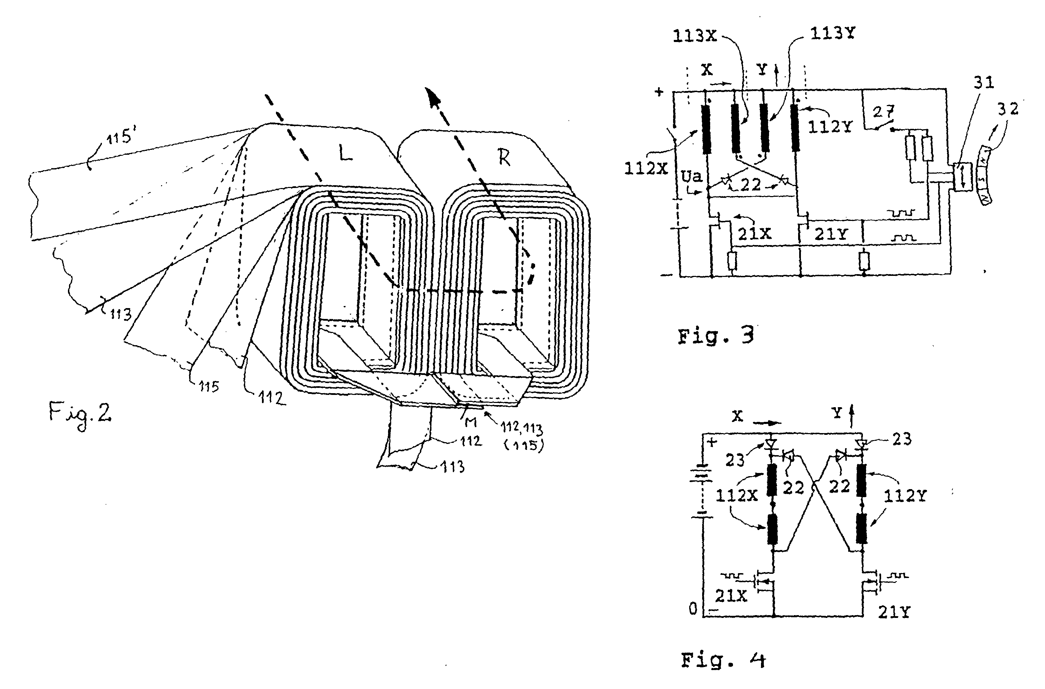

Die Fig. 1 zeigt auf einem halben Kreis mit vier unterschiedlichen Bereichen A, B, C, D (um die Anzahl der Zeichnungen zu reduzieren) verschiedene Ausführungsvarianten der Joche 11 mit Rotorpole 121 der Erfindung nach, alle mit der gleichen Schaltschrittweite w.

Wenn wir jede dieser Varianten A-D so betrachten, als wären sie gleichmäßig auf dem gesamten Kreisumfang ausgeführt und zwar mit einer geraden Anzahl von mindestens sechs Jochen, so ergäben sich 4 Maschinenvarianten, wie folgt:
A. Maschine mit außenliegenden Jochen 11, wobei jedes zwei Wicklungen trägt. (In diesem Kreisbogen wird außerdem die relative Stellung der Stator- und Rotorpole für die erste Phase X und der zweiten Phase Y gezeigt, sowie die Stellung eines Jochs 11Y' der Phase Y', die zu einer zweiten Maschine gehören, die an der ersten angekoppelt ist und gegenüber dieser mit w / 2 versetzt, um den Maschinenlauf gleichmäßiger zu machen.
   Jede Phase ist in Reihe mit wenigstens einem steuerbaren Halbleiter geschaltet, vorzugsweise mit einem Mosfet - Leistungstransistor.
B. Maschine mit sowohl außenliegenden wie innenliegenden Jochen 11 und mit einem topfförmigen Rotor 12.
C. Maschine mit außenliegenden Jochen 11, die nur eine Wicklung tragen.
D. Maschine mit innenliegenden Jochen 11.

Joche mit besseren Eigenschaften (die jedoch teurer sind) können wie die gewickelten und geschnittenen Kerne ausgeführt werden, wie die bei Transformatoren eingesetzten, anisotropischen Schnittbandkerne. Es ist in diesem Fall empfehlenswert, die Joche 11 nicht wie in Fig. 1 anzuordnen (sukzessive Reihenfolge der beiden U-Schenkeln in Drehrichtung) sondern um 90° verdreht, (gleichzeitiges Durchlaufen der Rotorpole, die ebenso um 90° verdreht sind, vor den zwei U-Schenkeln).
Die Symmetrieebene des Magnetkreises wird also nicht mehr diametral, sondern axial. Weil die gleichnamigen Pole der U-Elektromagnete auf der gleichen Seite in Achsialrichtung plaziert werden können, handelt es sich hier um eine Gleichpolmaschine, deren Rotor aus massivem Eisen hergestellt werden kann.
Weil eine 2-Phasen SR-Maschine erhebliche Drehmomentschwankungen hat, empfiehlt es sich, statt einer Maschine zwei, mit jeweils der Hälfte der geforderten Leistung einzusetzen, Maschinen die um w/2 winkelverschoben sind.
Die zwei Maschinen können jedoch eine gemeinsame mechanische Struktur haben. Weil die Elektromagnete beliebig um den Rotor angeordnet werden können, ist es möglich, den gleichen Rotor 12 (entsprechend breiter gebaut) für die beiden Maschinenhälften einzusetzen.
Dies bedeutet, daß die Hälfte der Gesamtzahl der Elektromagnete 1 der ersten Maschinenhälfte mit 2-Phasen X und Y zugeordnet sind, wobei die übrigen Magnete zur zweiten Maschinenhälfte mit den Phasen X'Y' gehören. Jeder Phase werden also je ein Viertel der vorhandenen Elektromagnete zugeordnet.
Eine korrekte Funktion der Maschine erfolgt, wenn die Überdeckung der Rotor-(121) bzw. Statorpole 111 so gewählt ist, daß, wenn die Stator- Rotorpole der Phase X übereinstimmen (Stellung Zahn-Zahn) die Stator- Rotorpole der zweiten Phase um den Winkel w verschoben sind (Stellung Zahn- Lücke). Die Stellung der Phasenmagnete im Bezug auf dem Winkel w (= Polbreite, = Lückenbreite) ist die folgende:

| Phase | Winkelstellung |
|---|---|
| X | (0 + 2n)w |
| Y | (1 + 2n)w |
| X' | (0,5 + 2n)w |
| Y' | (1,5 + 2n)w |

wobei n eine gerade Zahl ist.

Bei Erfüllung dieser Winkelbedingungen können die Elektromagnete 1 beliebig um den Rotor angeordnet werden, auch in der Form von Kreissegmenten, um den vorhandenen Raum optimal auszunutzen.
Im Folgenden werden wir eine einfache Maschine mit zwei Phasen X und Y und insgesamt n Jochen 11 betrachten, wobei für die Drehmomentglättung eine zweite, mit den ersteren identische, um w/2 winkelverschobene, neben diese angeordnete Maschine benutzt wird.
Der motorische Magnetkreis besteht also aus n/2 U-förmigen Magnetjochen 11X und n/2 Magnetjochen 11Y, wobei die n Joche identisch sind.

Jedes Joch hat je zwei Pole 111, die zu dem Rotor gerichtet sind, die die Nord bzw. Süd-Polarität annehmen, wenn durch die Hauptwicklungen 112 oder durch die Nebenwicklungen 113 ein Strom fließt.
Wie man der Fig. 1 entnehmen kann, wenn die zwei Rotorpole 121 mit den zwei Pole 111 X der Joche 11X übereinstimmen, so befinden sich die übrigen Pole 111Y gegenüber den Pollücken 122 der Rotorpole 121.
Die Rotorpole 121 sind untereinander durch ein gemeinsames Rotorjoch 123 verbunden, so daß diese Teile lediglich Ausformungen des Blechpaketes des Rotors 12 sind, welches aus gestanztem elektromagnetischem Blech besteht, das eine runde Form mit Zacken hat.
Diese Bleche sind direkt oder über zusätzliche Teile auf der Motorwelle 52 befestigt. Auf die U-Joche werden (vorzugsweise vorgefertigte) Wicklungen eingeschoben, wobei jedes Joch mindestens eine Hauptwicklung 112 hat.
Diese Wicklungen können in üblicher Weise mit Lackdraht, mit oder ohne Wickelkörper, z.B.mit Backlackdraht ausgeführt werden.
Vorzugsweise wird jedoch -der Erfindung nach- eine Bandwicklung eingesetzt, und zwar aus einem isolierten oder nicht isolierten Kupfer- (oder Aluminium)band.
Im letzteren Fall wird das Hauptwickelband einseitig mit einer Isolierfolie 115 (z. B. aus Polyester) flankiert, die etwas breiter als das elektrisch leitende Band ist, so daß Kurzschlüsse zwischen den spiralförmig gewickelten Rändern des metallischen Wickelbandes nicht erfolgen können.
Eine besonders günstige Lösung ist die gleichzeitige Ausführung der Hauptwicklung 112 wie der Nebenwicklung mit geringerem Querschnitt 113.
In diesem Fall werden die gleich breiten, jedoch unterschiedlichen Stärke (also unterschiedlicher Querschnitt) aufweisenden Wickelbänder übereinander gewickelt,, wobei sie durch zwei isolierende Folien 115, 115' getrennt sind.
Je zwei der beschriebenen Wicklungen werden über die zwei Schenkel der Joche 111 eingeschoben und befestigt, wo sie nach Bedarf geschaltet werden können.
Wenn man getrennt ein Joch 11 und zwei Rotorpole 121 betrachtet, zusammen mit dem Teil des Joches 123, das diese Pole verbindet, und wenn die zwei Wicklungen 112 von Strom durchflossen werden, so entsteht ein Magnetfluß, der der Punktlinie aus Fig. 1 entspricht.
Wenn die Rotorpole 121 nicht den Polen 111Y der Außenjoche gegenüberliegen (siehe Fig. 1), und wenn die Joche 11Y feststehen, so werden als Folge des Stromdurchganges die Pole 111Y die Rotorpole 121 anziehen, wobei ein Drehmoment entsteht, das den Rotor 12 um einen Winkel W dreht.
Zur Steuerung der Schaltvorgänge (Rotorstellungsrückmeldung) werden z. B. zwei Hallsensoren 31, 31' eingesetzt, die jeweils die Phasen X, Y und X', Y' der zwei "Motorhälften") steuern.

Die Hallsensoren werden durch einen Magnetring 32 umgeschaltet, der mit dem Rotor 12 solidarisch dreht und Nordpole aufweist, deren Winkelstellung- und -breite der Breite der Rotorpole entspricht, bzw. Südpole, die den Lücken zwischen den Rotorpolen entsprechen.

Um die Schaltgenauigkeit zu verbessern, können die Gebermagnetpole an einer mechanischen Ausbildung mit ausgeprägten Zähnen und Zwischenräumen gebunden sein.

Wenn die Pole der Magnetscheibe 32 sich nacheinander vor dem Hallsensor (mit digitalem Ausgang) bewegen, so erscheint an dessen Ausgang ein Logiksignal "low" oder "high", je nach der Rotorlage.

Durch die Änderung des Schaltpunktes kann außerdem eine Funktion der Reluktanzmaschine als Generator bewirkt werden.

Der Schaltpunkt wird derart verschoben, dass der Motor für einen Bruchteil des Schrittwinkels w mit Strom (für die Vormagnetisierung) versorgt wird, so dass ein ausreichendes Magnetfeld (Ampere-Windungszahl) entsteht.

Die Maschine wird also so eingestellt, dass sie bremst, damit sie mechanische Energie absorbiert, die zur Aufrechterhaltung der Ampère-Windungszahl durch Stromumkehr führt. Die Inversdioden, die sich in den Mosfet-Transistoren befinden werden die überschüssige Energie zu der Stromquelle führen.

Eine Wirkungsweise als Wechselstromgenerator kann erreicht werden, wenn die Joche 11 durch Gleichstromspeisung vormagnetisiert werden, wobei z.B. an einer anderen Wicklung ein Wechselstrom entnommen wird, welcher durch Magnetflußänderung entsteht, wenn sich die Rotorpole an den vormagnetisierten Statorpolen vorbei bewegen.

Der Steuerkreis der Wicklungen 112 und 113 besteht hauptsächlich aus zwei Leistungstransistoren, vorzugsweise MOSFET-Feldeffekttransistoren 21X, 21Y, die in Reihe mit den Hauptwicklungen 112X, bzw. 112Y und der dem Motor außenliegenden Stromquelle geschaltet sind, siehe Fig. 3.

Die Wicklungen 112 bzw. 113X (oder Y), die sich auf den U-Jochen befinden, können in Reihe oder parallel geschaltet werden, je nach dem Spannungspegel gerichtet, zu dem der Motor arbeitet.

Die Transistoren 21X und 21Y sind durch eine einfache elektronische Schaltung vom Hallsensor mit komplementären Ausgang gesteuert, so dass wenn am direkten Ausgang des Hallsensors "high" vorhanden ist, der Transistor 21X leitet, und der Transistor 21Y leitet, wenn der invertierende Ausgang des Hallsensors "high" ist.

Die gewickelten Joche 11X bzw. Joche 11Y werden also wechselweise magnetisiert, so dass an den Polen 111 ein Drehfeld erscheint, welches den Rotor in Bewegung versetzt.

Fig. 3 zeigt eine vollständige Schaltung eines funktionsfähigen Motors, wobei die Punkte neben den Wicklungen 112 bzw. 113 deren Anfänge markieren 112X sind z.B. die n/2 Hauptwicklungen, die in Reihe oder parallel geschaltet werden können und sich auf den n/2 Jochen 11X befinden.

In manchen Fällen (die Auswahl kann durch Versuch erfolgen) ist es jedoch besser, wenn die Stromfließrichtung durch die Wicklungen 112Y, 113Y geändert wird, d.h. die Punkte (der Angang der Wicklung) neben der Y-Wicklung würden im Vergleich zu Fig. 3 umgekehrt angeordnet.

Hier werden nur zwei Koppeldioden 22 gebraucht, die die Selbstinduktionsspannung. Ua zum Anfang der Nebenwicklung führen.

Wenn der Schalter 27 geschlossen wird, so wird der direkte bzw. der komplementäre Ausgang des Hallsensors 31 mit Strom versorgt und nimmt einen positives Potential an oder wird auf Masse geschaltet, je nachdem ob sich vor dem Hallsensor 31 ein Nord- bzw. Südpol der Magnetscheibe 32 befindet.

Die komplementären Ausgänge des Hallsensors (z.B. von der Fa. Allegro, Typ UGN 3275), die mit den Gate-Elektroden der Transistoren 21X, 21Y verbunden sind nehmen also wechselweise die Zustände "high" oder "low" an, so dass diese im selben Rhythmus leitend werden oder gesperrt sind.

Die schädliche Selbstinduktionsspannung Ua, die bei der Abschaltung einer Wicklung entsteht, kann in eine motorisch nutzbaren Wirkung umgewandelt werden, wenn sie der Wicklung zugeleitet wird, die sukzessiv eingeschaltet werden soll.

Wie aus Fig. 4 (Motor ohne Nebenwicklungen 113) ersichtlich ist, wird hier dies mit Hilfe der zwei Koppeldioden 22 realisiert, die die positive Überspannungsspannung, die bei der Abschaltung der X-Wicklung entsteht, zu der Wicklung 112Y führt, oder umgekehrt. Die Entkopplungsdioden 23 verhindern dass die Selbstinduktionsspannung Ua zu dem Plus-Anschluss der Spannungsquelle geführt wird.

Diese Schaltung hat jedoch den Nachteil dass die Schließung des elektrischen Kreises der Selbstinduktionsspannung Ua durch die Transistoren 21, bzw. durch die Spannungsquelle geschieht. Dieser Nachteil kann durch die Verwendung von Nebenwicklungen 113 vermieden werden, die sich auf den gleichen Jochen befinden, s. Fig. 3.

Die Selbstinduktionsspannung Ua stammt von der Wicklung 112X (Generator) und geht in der Nebenwicklung 113Y der Joche 11Y, die als Empfänger dienen.

Mit Hilfe der Selbstinduktionsüberspannung Ua der Wicklung 112X wird also ein Nutzstrom in den Wicklungen 113Y produziert, es entsteht also ein nützlicher Magnetfluß in den Jochen 111Y, auf die diese gewickelt sind.

Der Rotor 12 wird durch die Wiederholung der oben beschriebenen elektromagnetischen Vorgänge in eine kontinuierliche Drehbewegung versetzt.

Die Optimierung des Schaltpunktes kann praktisch durch die Verschiebung des Hallsensors 31 gegenüber den Jochen 11 erfolgen.

Die magnetischen und die elektrischen Teile des Motors können in einem Aufnahmerahmen befestigt werden.

Dieser Rahmen kann in sehr unterschiedlichen Arten ausgeführt werden, er hat jedoch hauptsächlich Ausnehmungen in die die Joche 11 und das Lager 54 der Motorwelle 52 montiert werden.

Ebenfalls auf diesem Rahmen, der als Kühler dient, können wie üblich die Leistungstransistoren 21, die Dioden 22 und 23 sowie andere mechanische und elektrische Bauteile (Platine, Hallsensoren, usw.) befestigt werden.

Wenn die Rotorpole 121 ungefähr mit den Statorpolen 111X übereinstimmen, wie in Fig. 1 dargestellt, werden deren zugeordnete Hauptwicklungen 112X abgeschaltet, was unmittelbar zum Auftreten der großen Selbstinduktionsspannung Ua führt, die auf die Nebenwicklung 113Y übertragen wird, wobei die Hauptwicklung 112Y aus der Stromquelle gespeist werden.

Die diesen Wicklungen zugeordneten Pole 111Y werden recht schnell aufmagnetisiert und sind dadurch imstande, die Rotorpole 121 anzuziehen, die sich gerade von den Polen der jetzt abgeschalteten Joche 11X entfernen.

Damit dies geschieht, müssen die Pole 111X (die Joche 11X) so angebracht werden, dass sie gerade Rotorzähne 121 anfangen anzuziehen, wenn diese (121) gerade die maximale Überdeckung mit den Polen 111Y überschritten haben. Eine Möglichkeit,, diese Bedingung zu erfüllen ist dass die Außenecken der Pole 111X unmittelbar in der Nähe der Außenecken der Pole 111Y angebracht sind (s. Fig. 1, Abschnitt C).

Die Montage der Joche 11 ist, (wegen des kleinen Luftspaltes zwischen den Rotor und gewickeltem Joch) wichtig und anspruchsvoll.

Wie es hier ersichtlich ist, weisen die Joche 11 beidseitig (ggf. in zwei von der Welle unterschiedlichen Entfernungen) Ausnehmungen oder halbrunde Erhebungen 116 auf, die über geeignete Gegenstücke 55 passend (senkrecht zu der Zeichnungsebene) auf der Basisplatte eingeschoben werden können.

Diese Gegenstücke stellen eine Negativform der vorhin erwähnten Ausnehmungen 116 dar und sind Bestandteil einer Basiplatte.

Die Joche sind also formschlüssig radial befestigt, was einen gleichmäßigen Abstand gegenüber dem Rotor 12 (einen konstanten Luftspalt) gewährleistet, weil das Lager 54 sich ebenfalls auf der Basisplatte befindet. Mit diesen Bestandteilen ist der Motor funktionsfähig.

### Funktionsweise:

Wenn der Motor an eine Stromquelle mit der Spannung Un angeschlossen ist, wird wegen des Signalpegels am Ausgang des Hallsensors 31 eine Steuerspannnung an der Gate-Elektrode der Transistoren 21 appliziert.
Die Hauptwicklung 112Y wird unter Strom gesetzt und zieht den Rotor 12 an, aus der in Fig. 1 dargestellten Ausgangsstellung durch eine Drehung um den Winkel w, zu einer Stellung, in welcher die Pole 111Y- 121 übereinstimmen. Es kommt also von der Relativstellung der Pole gegenüber der Y-Phase zu einer ähnlichen Stellung, dies jedoch der Phase X gegenüber.
Bevor diese Stellung erreicht wird, ändern sich die Logikpegel am Ausgang des Hallsensors 31, sodaß der Transistor 21X leitend wird, während 21Y sperrt.
Die bereits beschriebenen Vorgänge wiederholen sich und der Rotor dreht sich kontinuierlich gegenüber den gewickelten Jochen.
Die Vorteile der Erfindung bestehen darin, daß man sehr hohe spezifische Leistungen bei einer festgelegten, gewünschten Drehzahl erreichen kann, und daß die Maschine einfach ist und mit Teilen realisiert ist, die mehrfach zum Einsatz kommen, also für eine automatisierte Fertigung geeignet sind.

## Patentansprüche

1. Elektronisch kommutierter Reluktanzmotor oder -generator mit zwei Phasen,
**dadurch gekennzeichnet, dass**
dieser zwei Maschinen als an sich voneinander unabhängig funktionfähige, zweiphasige Maschinenhälften umfaßt, welche in Drehrichtung winkelversetzt zueinander angeordnet sind und daß dieser auf einem Stator angeordnete und voneinander unabhängige U-Jochen (11) umfaßt, welche Wicklungen tragen und zwei Magnetpole (111) aufweisen, die über einen Luftspalt mit einem beweglichen, unbewickelten Rotor (12) zusammenwirken, welcher um seinen gesamten Umfang gleichmäßig voneinander beabstandete Rotorpole (121) aufweist, die im Wesentlichen eine den Polen (111) der U-Joche (11) entsprechende Fläche aufweisen, wobei der Abstand zwischen den Rotorpolen (121) deren Breite in Umfangsrichtung entspricht und die Breite eines Rotorpoles (121) in Umfangsrichtung ein Winkelsegment w definiert, wobei die U-Joche (11) an zwei elektrisch um 180° verschobenen Phasen (X, Y) angeschlossen sind, wobei die Phasen (X, Y) durch mindestens einen Leistungshalbleiter (21X, 21Y) mit Strom versorgt sind, wobei Dioden (22) vorgesehen sind, welche die Entmagnetisierungsenergie einer Phase (X bzw. Y) auf die andere Phase (Y bzw. X) überträgt, wobei die Anzahl der elektromagnetischen U-Joche (11) des Stators sechs oder eine größere gerade Zahl N ist, wobei eine erste Statoranordnung mit U-Jochen (11X, 11Y) der ersten Maschinenhälfte und eine zweite Statoranordnung mit U-Jochen (11X', 11Y') der zweiten Maschinenhälfte vorgesehen ist, wobei die U-Joche (11X, 11Y) der ersten Statoranordnung ersten Phasen (X, Y) und die U-Joche (11X', 11Y') der zweiten Statoranordnung zweiten Phasen (X', Y') zugeordnet sind, wobei die U-Joche der ersten Maschine (11X, 11Y) bzgl. den U-Jochen der zweiten Maschine (11X', 11Y') in Umfangsrichtung versetzt zueinander angeordnet sind.

2. Elektronisch kommutierter Reluktanzmotor oder -generator nach Anspruch 1, **dadurch gekennzeichnet, daß** die U-Joche (11X, 11Y, 11X', 11Y') derart angeordnet sind, dass sie folgende Winkelbedingungen erfüllen, die U-Joche (11X) der X-Phase sind in Winkelposition (0+2n)w, die U-Joche (11Y) der Y-Phase sind in Winkelposition (1+2n)w, die U-Joche der X'-Phase sind in Winkelposition (0,5+2n)w und die U-Joche (11Y') der Y'-Phase sind in Winkelposition (1,5+2n)w angeordnet, wobei n eine ganze Zahl ist.

3. Elektronisch kommutierter Reluktanzmotor oder -generator nach Anspruch 1 oder 2, **dadurch gekennzeichnet, dass** die U-Joche (11) beidseits des Rotors (12) angeordnet sind.

4. Elektronisch kommutierter Reluktanzmotor oder -generator nach einem der Ansprüche 1 bis 3, **dadurch gekennzeichnet, dass** die U-Joche (11) ungleichmäßig und nur auf Teilen des Rotorumfangs angeordnet sind.

5. Elektronisch kommutierter Reluktanzmotor oder -generator nach einem der Ansprüche 1 bis 4, **dadurch gekennzeichnet, dass** die Joche (11) derart angeordnet sind, dass die Symmetrieebene des Magnetkreises axial ist.

6. Elektronisch kommutierter Reluktanzmotor oder -generator nach einem der vorhergehenden Ansprüche, **dadurch gekennzeichnet, dass** die beiden Maschinenhälften einen gemeinsamen Rotor aufweisen.

7. Elektronisch kommutierter Reluktanzmotor oder -generator nach einem der vorhergehenden Ansprüche, **dadurch gekennzeichnet, dass** die beiden Maschinenhälften eine gemeinsame mechanische Struktur aufweisen.

8. Elektronisch kommutierter Reluktanzmotor oder -generator nach einem der vorhergehenden Ansprüche, **dadurch gekennzeichnet, dass** ein Funktionswechsel zwischen Motor- und Generatorfunktion über eine Verschiebung eines Schaltpunktes erfolgt.

9. Elektronisch kommutierter Reluktanzmotor oder -generator nach einem der vorhergehenden Ansprüche mit Funktion als Wechselstromgenerator, **dadurch gekennzeichnet, dass** die Statorpole mit Gleichstrom vormagnetisiert sind.

10. Elektronisch kommutierter Reluktanzmotor oder -generator nach einem der vorhergehenden Ansprüche, **dadurch gekennzeichnet, dass** Phasenwicklungen (112Y, 113Y, 112X, 113X) derart angeordnet sind, daß eine Stromflußrichtung in ersten Phasenwicklungen (112Y, 113Y) gleich oder umgekehrt bzgl. einer Stromflußrichtung in zweiten Phasenwicklungen (112X, 113X) ist.

11. Elektronisch kommutierter Reluktanzmotor oder -generator nach einem der vorhergehenden Ansprüche, **dadurch gekennzeichnet, dass** ein Gebermagnet (32) mit an diesem ausgebildeten Zähnen und Zahnlükken vorgesehen ist.

## Claims

1. An electronically switched reluctance motor or generator with two phases,
**characterized in that**
this motor comprises two machines as two-phase machine halfs, operative independently the one from the other, which are arranged with an offset angle in the sense of rotation and that this motor comprises U-yokes (11), arranged on a stator and independent the one from the other, which carry windings and which have two magnet poles (111) which cooperate over an air gap with a movable unwound rotor (12) which has rotor poles (121) which are evenly spaced on its whole periphery which substantially have a surface corresponding to the poles (111) of the U-yokes (11), whereby the distance between the rotor poles (121) corresponds to their width in the peripheral direction and the width of a rotor pole (121) in the peripheral direction defines an angular segment w, whereby the U-yokes (11) are connected to two phases (X, Y) with an electrical phase offset about 180°, whereby the phases (X, Y) are fed with current by at least one power semiconductor (21X, 21Y), whereby diodes (22) are provided for, which transmit the demagnetization energy of a phase (X or Y) to the other phase (Y or X), whereby the number of the electromagnetic U-yokes (11) of the stator is six or a bigger even number N, whereby a first stator arrangement with U-yokes (11X, 11Y) of the first machine half and a second stator arrangement with U-yokes (11X', 11Y') of the second machine half are provided, whereby the U-yokes (11X, 11Y) of the first stator arrangement are assigned to first phases (X, Y) and the U-yokes (11X', 11Y') of the second stator arrangement are assigned to second phases (X', Y'), whereby the U-yokes of the first machine (11X, 11Y) are arranged offset in the peripheral direction with respect to the U-yokes of the second machine (11X', 11Y').

2. An electronically switched reluctance motor or generator according to claim 1, **characterized in that** the U-yokes (11X, 11Y, 11X', 11Y') are arranged in such a way that they fulfill the following angular conditions, the U-yokes (11X) of the X-phase are in the angular position (0+2n)w, the U-yokes (11Y) of the Y-phase are in the angular position (1+2n)w, the U-yokes of the X'-phase are in the angular position (0,5+2n)w and the U-yokes (11Y') of the Y'-phase are in the angular position (1,5+2n)w, whereby n is an even number.

3. An electronically switched reluctance motor or generator according to claim 1 or 2, **characterized in that** the U-yokes (11) are arranged on both sides of the rotor (12).

4. An electronically switched reluctance motor or generator according to one of the claims 1 to 3, **characterized in that** the U-yokes (11) are arranged unevenly and only on parts of the rotor periphery.

5. An electronically switched reluctance motor or generator according to one of the claims 1 to 4, **characterized in that** the yokes (11) are arranged in such a way that the plane of symmetry of the magnet circuit is axial.

6. An electronically switched reluctance motor or generator according to one of the preceding claims, **characterized in that** both machine halts have a common rotor.

7. An electronically switched reluctance motor or generator according to one of the preceding claims, **characterized in that** both machine halfs have a common mechanical structure.

8. An electronically switched reluctance motor or generator according to one of the preceding claims, **characterized in that** a change of function between the motor and the generator function occurs over a shift of a break-over point.

9. An electronically switched reluctance motor or generator according to one of the preceding claims with a function as an A.C. generator, **characterized in that** the stator poles are premagnetized with direct current.

10. An electronically switched reluctance motor or generator according to one of the preceding claims, **characterized in that** phase windings (112Y, 113Y, 112X, 113Y) are arranged in such a way that a current conduction direction in first phase windings (112Y, 113Y) is equal or opposite to a current conduction direction in second phase windings (112X, 113X).

11. An electronically switched reluctance motor or generator according to one of the preceding claims, **characterized in that** a transmitting magnet (33) is provided with teeth and teeth spaces configured on this magnet.

## Revendications

1. Moteur ou génératrice à réluctance commutée électroniquement à deux phases,
**caractérisé en ce**
**que** ce moteur comprend deux machines en tant que moitiés de machines à deux phases capables de fonctionner indépendamment l'une de l'autre, qui sont placées dans le sens de la rotation déportées d'un angle l'une par rapport à l'autre et que ce moteur comprend des culasses en U (11) placées sur un stator et indépendantes l'une de l'autre qui portent des enroulements et présentent deux pôles magnétiques (111) qui co-opèrent par un entrefer avec un rotor mobile non enroulé (12) qui présente des pôles de rotor (121), espacés régulièrement l'un de l'autre sur l'ensemble de sa circonférence, qui présentent substantiellement une surface qui correspond aux pôles (111) des culasses en U (11), la distance entre les pôles de rotor (121) correspondant à leur largeur dans le sens de la circonférence et la largeur d'un pôle de rotor (121) définissant dans le sens de la circonférence un segment d'angle w, les culasses en U (11) étant raccordées à deux phases décalées électriquement de 180° (X, Y), les phases (X, Y) étant alimentées en courant par au moins un semiconducteur de puissance (21X, 21Y), des diodes (22) étant prévues qui transmettent l'énergie de démagnétisation d'une phase (X ou Y) à l'autre phase (Y ou X), le nombre des culasses électromagnétiques en U (11) du stator étant six ou un plus grand nombre pair N, un premier dispositif de stator avec des culasses en U (11X, 11Y) de la première moitié de machine et un second dispositif de stator avec des culasses en U (11X', 11Y') de la seconde moitié de machine étant prévu, les culasses en U (11X, 11Y) du premier dispositif de stator étant associé à des premières phases (X, Y) et les culasses en U (11X', 11Y') du second dispositif de stator étant associé à des secondes phases (X', Y'), les culasses en U de la première machine (11X, 11Y) étant placées en étant décalées l'une par rapport à l'autre dans le sens de la circonférence par rapport aux culasses en U de la seconde machine (11X', 11Y').

2. Moteur ou génératrice à réluctance commutée électroniquement à deux phases selon la revendication 1,
**caractérisé en ce que** les culasses en Y (11X, 11Y, 11X', 11Y') sont placées de telle manière qu'elles remplissent les conditions angulaires suivantes, les culasses en U (11X) de la phase X sont en position angulaire (0+2n)w, les culasses en U (11Y) de la phase Y sont en position angulaire (1+2n)w, les culasses en U de la phase X' sont en position angulaire (0,5+2n)w et les culasses en U (11Y') de la phase Y' sont en position angulaire (1,5+2n)w, n étant un nombre entier.

3. Moteur ou génératrice à réluctance commutée électroniquement à deux phases selon la revendication 1 ou 2,
**caractérisé en ce que** les culasses en U (11) sont placées des deux côtés du rotor (12).

4. Moteur ou génératrice à réluctance commutée électroniquement à deux phases selon la revendication 1 ou 2,
**caractérisé en ce que** les culasses en U (11) sont placées irrégulièrement et seulement sur des parties de la circonférence du rotor.

5. Moteur ou génératrice à réluctance commutée électroniquement à deux phases selon la revendication 1 ou 2,
**caractérisé en ce que** les culasses (11) sont placées de telle manière que le plan de symétrie du circuit magnétique est axial.

6. Moteur ou génératrice à réluctance commutée électroniquement à deux phases selon la revendication 1 ou 2,
**caractérisé en ce que** les deux moitiés de machine présentent un rotor commun.

7. Moteur ou génératrice à réluctance commutée électroniquement à deux phases selon la revendication 1 ou 2,
**caractérisé en ce que** les deux moitiés de machine présentent une structure mécanique commune.

8. Moteur ou génératrice à réluctance commutée électroniquement à deux phases selon la revendication 1 ou 2,
**caractérisé en ce qu'**un changement de fonction entre fonction moteur et fonction génératrice se fait par un déplacement du point de commutation.

9. Moteur ou génératrice à réluctance commutée électroniquement à deux phases selon l'une des revendications précédentes avec la fonction comme génératrice à courant alternatif,
**caractérisé en ce que** les pôles du stator sont prémagnétisés avec du courant continu.

10. Moteur ou génératrice à réluctance commutée électroniquement à deux phases selon l'une des revendications précédentes, **caractérisé en ce que** des enroulements de phase (112Y, 113Y, 112X, 113X) sont placés de telle manière qu'un sens de flux de courant dans des premiers enroulements de phase (112Y, 113Y) est le même ou est inverse par rapport à un sens de flux de courant dans des seconds enroulements de phase (112X, 113X).

11. Moteur ou génératrice à réluctance commutée électroniquement à deux phases selon l'une des revendications précédentes, **caractérisé en ce qu'**un aimant transmetteur (32) est prévu avec des dents configurées sur celui-ci et des entredents.
